# EUROPÄISCHE PATENTSCHRIFT

(11) **EP 2 358 953 B1**
(45) Veröffentlichungstag und Bekanntmachung des Hinweises auf die Patenterteilung: **18.07.2012**
(21) Anmeldenummer: 09775862.7
(22) Anmeldetag: 22.04.2009
(51) Int. Cl.: E04D 13/10, F24J 2/52, H01L 31/042

(54) **GETEILT AUSGEBILDETER DACHHAKEN**
ROOF HOOK HAVING A SPLIT DESIGN
CROCHET DE TOIT CONÇU EN PLUSIEURS PIÈCES

(30) Priorität: 28.11.2008 DE 202008016000 U
(43) Veröffentlichungstag der Anmeldung: 24.08.2011
(73) Patentinhaber: HatiCon GmbH, 16278 Pinnow (DE)
(72) Erfinder: GENSCHOREK, Gido, 16278 Pinnow (DE)
(74) Vertreter: Kietzmann, Manfred
(86) Internationale Anmeldenummer: PCT/DE2009/000559
(87) Internationale Veröffentlichungsnummer: WO 2010/060391

(56) Entgegenhaltungen:
- DE-A1- 10 213 902
- DE-A1-102005 051 625
- JP-A- 60 261 860

## Beschreibung

Die Erfindung betrifft einen Dachhaken zur Übertragung hoher Lasten von Solaranlagen in die Unterkonstruktion von Dächern. Als Solaranlagen können sowohl Photovoltaikmodule oder auch Solarkollektoren Anwendung finden, die auf oder an Traggerüsten montiert mit dem Dachhaken verbunden sind oder es besteht eine direkte Verbindung zum Dachhaken.

Der Dachhaken wird durch die Dachdeckung geführt und mit der Unterkonstruktion des Daches verbunden, in der Regel mittels Halteschrauben oder durch eine formschlüssige Verbindung (DE 20 2007 011 314 U1). Als Material werden gebogene flache Stahlprofile, vorallem aus Edelstahl verwendet. Aus der EP 1 764 454 A2 ist auch ein Dachhaken aus Aluminiumguss bekannt. In der DE 20 2005 004 348 U1 wird nur allgemein von einem Aluminiumdachhaken gesprochen.

Aus dem Stand der Technik sind weiter geteilt ausgebildete Dachhaken bekannt. Sie bestehen aus einem Fußteil, der mit der Dachunterkonstruktion verbunden ist und dem eigentlichen Hakenteil, das durch die Dachdeckung geführt und mit dem Fußteil einerseits und dem Traggerüst für die Solarmodule andererseits verbunden ist.

Fußteil und Hakenteil können starr, z.B. durch Verschweißen, oder lösbar z.B. durch eine Bolzen-Mutter-Verbindung miteinander verbunden sein. Geteilt im Sinne der vorliegenden Erfindung bedeutet: lösbare Verbindung.

Das Hakenteil kann auch noch geteilt ausgebildet sein, um einen weiteren Höhenausgleich bei der Montage vornehmen zu können.

Die grundsätzlichen Verstellmöglichkeiten sind in der DE 20 2005 009 U1 beschrieben.

Die lösbare Verbindung zwischen dem Fußteil und dem Hakenteil erfolgt gemäß der DE 201 19 478 U1 durch eine Schraubverbindung, die gemäß DE 20 2005 019 897 U1 eine Höhenverstellmöglichkeit einschließen kann.

Alternativ sind auch formschlüssige Verbindungen zwischen dem Fuß- und dem Hakenteil beschrieben, vorallem unter dem Gesichtspunkt eines Seitenausgleiches, d.h. einer Verschiebung parallel zur Befestigungsebene des Fußteils (DE 102 13 902 A1, DE 10 2005 058 065 A1, DE 20 2005 004 348 U1).

Den benannten Konstruktionen von geteilt ausgebildeten Dachhaken ist im Wesentlichen gemeinsam, dass das Fußteil einen zur Befestigungsebene auf der Dachunterkonstruktion senkrechten Abschnitt aufweist, an dem der eigentliche Haken angeflanscht ist. Aufgrund des Hebelarms des Hakenteils unterliegt dieser Winkel einer hohen Belastung, was Hersteller dazu bewogen hat, auf ein allgemein bekanntes Prinzip zurückzugreifen, nämlich zwischen dem in der Befestigungsebene liegenden Abschnitt des Fußteils und dem dazu senkrecht stehenden Abschnitt Verstärkungsrippen oder Verstärkungsstege anzuordnen (DE 20 2006 009 674, EP 1 764 454 A2).

Diese die Belastbarkeit verbessernde Maßnahme ist mit höheren Produktionskosten bei der Herstellung der Dachhaken verbunden, indem auf ein Gußverfahren ausgewichen wird oder zusätzliche Umformungsschritte zum Anformen der Stege notwendig werden.

Bei dem in der DE 102 13 902 A1 beschriebenen Dachhaken weist das Fußteil eine nutartige Ausbildung auf, in die das als Nutfeder ausgebildete Endteil des Hakenteils einschiebbar ist. Durch die Ausbildung dieser Paarung ist neben der seitlichen Verschiebbarkeit eine begrenzte Schwenkmöglichkeit und Höhenverstellung erreichbar.

JP 60 261860 A zeigt einen geteitt ausgebildeten Dachhaken gemäß dem Oberbegriffs des Anspruchs 1.

Aufgabe der Erfindung ist es, einen geteilt ausgebildeten Dachhaken vorzuschlagen, dessen Fußteil unter Verzicht auf einzelne Verstärkungsstege oder -rippen eine hohe Belastbarkeit aufweist und aus Aluminium oder einer Aluminiumlegierung herstellbar ist.

Gelöst wird diese Aufgabe mit den Merkmalen des Anspruches 1, vorteilhafte Ausgestaltungen sind Gegenstand der Unteransprüche.

Erfindungsgemäß wird bei einem geteilt ausgebildeten Dachhaken mit einem Fußteil zur Herstellung einer Verbindung mit einer Dachunterkonstruktion und einem mit dem Fußteil verbindbaren Hakenteil, das am anderen Ende über einen Anschluss für die Befestigung eines über der Dachhaut befindlichen Traggerüstes oder einer Baueinheit verfügt, vorgeschlagen, dass das Fußteil ein abgelängter Abschnitt (X) eines Winkelprofils ist, vorzugsweise eines Aluminiumstrangpresswinkelprofils, dessen einer Winkelschenkel über Anschlüsse zur Herstellung der Verbindung mit der Dachunterkonstruktion verfügt, wobei die Anschlüsse beabstandet vom anderen Winkelschenkel angeordnet sind und zwischen den beiden Winkelschenkeln winkelinnenseitig eine in Profillängsrichtung verlaufende Profilwand besteht, die mit dem Winkelschenkelbereich der Anschlüsse einen stumpfen Winkel (α) einschließt, die als Auflagefläche für das Ende des Hakenteils dient und die mit diesem Ende des Hakenteils durch eine Schraubverbindung verbindbar ist. Der Winkel (α) wird bevorzugt aus dem Bereich von 110 -145° ausgewählt.

Um ein Aufsetzen des Hakenteils auf der Dachhaut zu verhindern ist ferner vorgesehen, dass der in der Dachdeckung geführte Abschnitt des Hakenteils mit dem Ende des Hakenteils einen stumpfen Winkel (β) einschließt, wobei α ≤ β, bevorzugt bis 10° größer.

Der Querschnitt des Fußteils läßt sich somit grundsätzlich beschreiben als rechtwinkliges Dreieck, dessen eine Kathete über das Dreieck hinaus verlängert ist und dessen Hypotenuse Auflage- und Verbindungsfläche zum Hakenteil ist.

Für die Verbindung mit dem Hakenteil sind verschiedene Möglichkeiten alternativ vorgesehen.

Eine erste Ausführung sieht vor, dass die Profilwand des Fußteils und das Ende des Hakenteils zur Herstellung einer Verbindung zwischen diesen mindestens jeweils eine Bohrung aufweisen und als Verbindungselement eine Bolzen-Mutter-Verbindung dient oder eine Schraube, die durch die Bohrung des Endes geführt in die Bohrung der Profilwand eingreift. Diese Ausführung nutzt die hohe Stabilität des vorgeschlagenen Querschnittes, bietet aber keine Verstellmöglichkeit. Diese ist in Grenzen erreichbar, indem eine oder beide Bohrungen als Langlöcher ausgebildet sind.

Bei einer zweiten Ausführung weist die Profilwand des Fußteils eine Längsnut mit nach innen gekröpften Nutkanten auf und das Ende des Hakenteils eine Bohrung, so dass eine Schraubverbindung zwischen einem in der Längsnut geführt gelagerten Formteil und einem durch die Bohrung geführten weiteren Formteil unter Verspannung des Endes mit der als Auflage dienenden Profilwand herstellbar ist. Diese Ausführung nutzt die hohe Stabilität des vorgeschlagenen Querschnittes und bietet eine Verstellmöglichkeit parallel zur Befestigungsebene des Fußteils verlaufend. Eine Höhenverstellung ist zusätzlich erreichbar, wenn die Bohrung im Ende des Hakenteils als Langloch ausgebildet ist.

Ähnlich ist die dritte Ausführung gestaltet. Hier weist die Profilwand des Fußteils in Profillängsrichtung einen Längsschlitz auf und das Ende des Hakenteils eine Bohrung, so dass eine Schraubverbindung zwischen einem unterhalb des Längsschlitzes verschiebbar angeordneten Formteil und einem durch die Bohrung geführten weiteren Formteil unter Verspannung des Endes mit der als Auflage dienenden Profilwand herstellbar ist. Eine Höhenverstellung ist auch hier zusätzlich erreichbar, wenn die Bohrung im Ende des Hakenteils als Langloch ausgebildet ist.

Eine Reduzierung der Belastbarkeit durch den Schlitz in der Profilwand läßt sich leicht kompensieren durch weitere innerhalb des Dreieckprofils angeordnete in Längsrichtung verlaufende Profilwände. Diese müssen nur so angeordnet sein, dass die Längsverschiebbarkeit des Formteils nicht eingeschränkt wird. Im Ausführungsbeispiel ist eine solche Anordnung dargestellt.

Im Gegensatz zu einer Nut im Vollmaterial der Profilwand hat die beschriebene Schlitzvariante den Vorteil eines verringerten Materialeinsatzes.

Natürlich ist es von Vorteil, wenn bei allen drei Ausführungen die Innenfläche des Endes des Hakenteils und die als Auflage dienende Profilwand profiliert ausgebildet sind, vorzugsweise in Form ineinandergreifender Längsverzahnungen, um beim Zusammenfügen einen Formschluss zu bilden. Mit einer Schraubverbindung wird so auch das Verdrehen des Hakenteils gegenüber dem Fußteil unterbunden.

Sind beidseitig der Nut oder des Schlitzes Längsverzahnungen angeordnet und weist die Innenfläche des Endes des Hakenteils ebenfalls Längsverzahnungen auf, wird beim Verbinden von Fuß- und Hakenteil der obere Abschnitt des Winkelschenkels, der mit der Profilwand bündig abschließt zusätzlich stabilisiert, d.h. ein Wegbiegen dieses Schenkels nach außen unter der Last des Hakenteils verhindert, da zwischen den durch die Nut oder den Schlitz getrennten Abschnitten der Profilwand Form- und Kraftschluss über das Ende des Hakenteils hergestellt ist.

Allen drei Varianten ist weiter gemeinsam, dass das Fußteil aus einem stranggepressten Aluminiumprofil durch Ablängen herstellbar ist. Das ist fertigungstechnisch optimal.

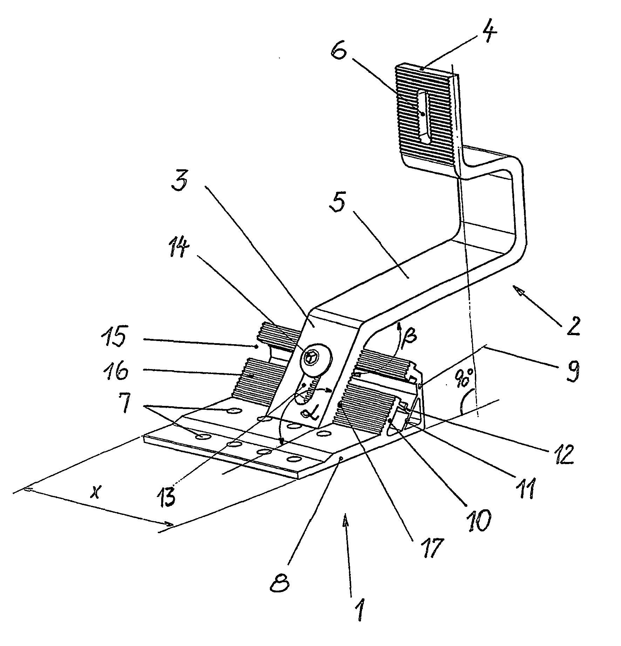

Ein Ausführungsbeispiel ist in der Zeichnung dargestellt. Der dargestellte geteilt ausgebildete Dachhaken weist ein Fußteil 1 zur Herstellung einer Verbindung mit einer Dachunterkonstruktion und ein mit dem Fußteil 1 verbindbares Hakenteil 2 auf, das am anderen Ende 4 über einen Anschluss 6 für die Befestigung eines über der Dachhaut befindlichen Traggerüstes oder einer Baueinheit verfügt.

Das Fußteil 1 ist ein abgelängter Abschnitt (X) eines Winkelprofils, dessen einer Winkelschenkel 8 über die Anschlüsse 7 zur Herstellung der Verbindung mit der Dachunterkonstruktion verfügt, wobei die Anschlüsse 7 beabstandet vom anderen Winkelschenkel 9 angeordnet sind. Zwischen den beiden Winkelschenkeln 8, 9, die hier einen rechten Winkel einschließen, ohne dass der Dachhaken darauf beschränkt ist, ist winkelinnenseitig eine durchgängige Profilwand 10 angeordnet, die einen Längsschlitz 15 aufweist, die mit dem Winkelschenkelbereich der Anschlüsse 7 einen stumpfen Winkel (α) einschließt, die als Auflagefläche für das Ende 3 des Hakenteils 2 dient und die über den Längsschlitz 15 mit dem Ende 3 des Hakenteils 2 verbindbar ist.

Dazu ist in das Ende 3 des Hakenteils 2 eine Bohrung 13 in Form eines Langloches eingebracht, so dass eine Schraubverbindung 14 zwischen einem unterhalb des Längsschlitzes 15 verschiebbar angeordneten Formteil, vorzugsweise einer Mutter, und einem durch die Bohrung 13 geführten weiteren Formteil, vorzugsweise einem Bolzen, unter Verspannung des Endes 3 mit der als Auflage dienenden Profilwand 10 herstellbar ist.

Zur Verstärkung des Überganges zwischen den beiden Winkelschenkeln 8, 9 ist winkelinnenseitig und beabstandet von der Profilwand 10 eine weitere innere Profilwand 11 angeordnet ist, die vorzugsweise parallel zur äußeren Profilwand 10 verläuft. Weiter ist zwischen den Profilwänden 10, 11 eine die Profilwände 10, 11 verbindende Verbindungsprofilwand 12 angeordnet.

Die Profilwand 10 schließt mit der äußeren Kante des Winkelschenkels 9 ab oder liegt auf dieser auf. Dabei kann das obere Ende des Winkelschenkels 9 leicht in Richtung Profilwand 10 gekröpft sein.

Die Innenfläche des Endes 3 und die als Auflage dienende Profilwand 10 sind profiliert ausgebildet, vorzugsweise wie dargestellt in Form ineinandergreifender Längsverzahnungen 16, 17, um beim Zusammenfügen einen Formschluss zu bilden. Sind beidseitig des Längsschlitzes 15 Längsverzahnungen 16 angeordnet und weist die Innenfläche des Endes 3 des Hakenteils ebenfalls eine Längsverzahnung 17 auf, wird beim Verbinden von Fuß- und Hakenteil 1, 2 der obere Abschnitt des Winkelschenkels 9, der mit der Profilwand 10 bündig abschließt oder auf dem gekröpften Ende aufliegend hergestellt ist zusätzlich stabilisiert. Ein Wegbiegen dieses Winkelschenkels 9 nach außen unter der Last des Hakenteils 2 wird auch bei Höchstbelastungen verhindert.

Unter materialökonomischen Gesichtspunkten ist weiter vorgesehen, dass der Winkelschenkel 8 eine ebene Auflagefläche für die Dachunterkonstruktion aufweist und in der gegenüberliegenden oberen Fläche beabstandet vom Winkelschenkel 9 in der Schenkelhöhe abgesetzt ist.

Beim Hakenteil 2 selbst ist vorgesehen, dass der in der Dachdeckung geführte Abschnitt 5 des Hakenteils 2 mit dem Ende 3 des Hakenteils einen stumpfen Winkel (β) einschließt, wobei α ≤ β. Der Winkel (β) wird bevorzugt um bis zu 10° größer als (α) angesetzt.

Weiter ist dargestellt, dass das Ende 4 des Hakenteils 2, das als Montageanschluss dient, bei hergestellter Verbindung zwischen Fuß- und Hakenteil 1, 2 senkrecht zur Ebene der Anschlüsse 7 angeordnet ist. Auch hier sorgt ein Langloch für einen Höhenverstellmöglichkeit und sind Längsverzahnungen oder Riffelungen vorgesehen, um den durch eine Schraubverbindung erzielbaren Kraftschluss durch Formschluss zu unterstützen.

Der vorgeschlagene Dachhaken vereint in sich alle Vorteile bekannter Dachhaken und verbindet sie mit hoher Fertigungsökonomie.

Auch wenn wie vorstehend beschrieben, der Dachhaken vorrangig für die Montage von Solartechnik auf Dächern konzipiert ist, so ist seine Verwendung nicht darauf beschränkt. Ebenso können Traggerüste für andere auf einem Dach zu montierende Bauteile daran befestigt werden, wie Laufstege, Schneefanggitter aber auch Werbeträger etc.

### Bezugszeichenliste

- 1: Fußteil
- 2: Hakenteil
- 3: mit dem Fußteil verbindbares Ende des Hakenteils (2)
- 4: Ende des Hakenteils (2) als Montageanschluss
- 5: Abschnitt des Hakenteils (2) der durch die Dachdeckung geführt ist
- 6: Anschluss des Endes (4) des Hakenteils (2)
- 7: Anschlüsse des Fußteils (1) an der Dachunterkonstruktion
- 8: Winkelschenkel mit Anschlüssen (7)
- 9: Winkelschenkel
- 10: Profilwand' (Auflagefläche für Ende (3))
- 11: innere Profilwand
- 12: Verbindungsprofilwand
- 13: Bohrung im Ende (3) des Hakenteils (2)
- 14: Schraubverbindung
- 15: Längsschlitz in der Profilwand (10)
- 16: Längsverzahnung
- 17: Längsverzahnung

## Patentansprüche

1. Geteilt ausgebildeter Dachhaken mit einem Fußteil (1) zur Herstellung einer Verbindung mit einer Dachunterkonstruktion und einem mit dem Fußteil (1) durch eine Schraubverbindung verbindbaren Hakenteil (2), das am anderen Ende (4) über einen Anschluss (6) für die Befestigung eines über der Dachhaut befindlichen Traggerüstes oder einer Baueinheit verfügt und zwischen den beiden Enden (3,4) einen in der Dachdeckung führbaren Abschnitt (5) aufweist, wobei
das Fußteil (1) ein abgelängter Abschnitt (X) eines Winkelprofils mit Winkelschenkeln (8,9) ist, dessen einer Winkelschenkel (8) über Anschlüsse (7) zur Herstellung der Verbindung mit der Dachunterkonstruktion verfügt, wobei die Anschlüsse (7) beabstandet vom anderen Winkelschenkel (9) angeordnet sind, **dadurch gekennzeichnet, dass** zwischen den beiden Winkelschenkeln (8, 9) winkelinnenseitig eine in Profillängsrichtung verlaufende Profilwand (10) besteht,
die mit dem Winkelschenkelbereich der Anschlüsse (7) einen stumpfen Winkel (α) einschließt, die als Auflagefläche für das Ende (3) des Hakenteils (2) dient und
die mit dem Ende (3) des Hakenteils (2) durch die Schraubverbindung verbindbar ist und
der in der Dachdeckung führbare Abschnitt (5) des Hakenteils (2) mit dem Ende (3) des Hakenteils einen stumpfen Winkel (β) einschließt, wobei α ≤ β.

2. Geteilt ausgebildeter Dachhaken nach Ansprüch 1, **dadurch gekennzeichnet, dass**
die Profilwand (10) des Fußteils (1) und das Ende (3) des Hakenteils (2) zur Herstellung einer Verbindung zwischen diesen mindestens jeweils eine Bohrung (13) aufweisen und als Verbindungselement eine Bolzen-Mutter-Verbindung dient oder eine Schraube durch die Bohrung (13) des Endes (3) geführt in die Bohrung der Profilwand (10) eingreift.

3. Geteilt ausgebildeter Dachhaken nach Ansprüch 1, **dadurch gekennzeichnet, dass**
die Profilwand (10) des Fußteils (1) eine Längsnut mit nach innen gekröpften Nutkanten aufweist und das Ende (3) des Hakenteils (2) eine Bohrung (13), so dass eine Schraubverbindung (14) zwischen einem in der Längsnut geführt gelagerten Formteil, und einem durch die Bohrung (13) geführten weiteren Formteil unter Verspannung des Endes (3) mit der als Auflage dienenden Profilwand (10) herstellbar ist.

4. Geteilt ausgebildeter Dachhaken nach Ansprüch 1, **dadurch gekennzeichnet, dass**
die Profilwand (10) des Fußteils in Profillängsrichtung einen Längsschlitz (15) aufweist und das Ende (3) des Hakenteils (2) eine Bohrung (13), so dass eine Schraubverbindung (14) zwischen einem unterhalb des Längsschlitzes (15) verschiebbar angeordneten Formteil und einem durch die Bohrung (13) geführten weiteren Formteil unter Verspannung des Endes (3) mit der als Auflage dienenden Profilwand (10) herstellbar ist.

5. Geteilt ausgebildeter Dachhaken nach Anspruch 4, **dadurch gekennzeichnet, dass**
innerhalb des Raumes, gebildet aus der Profilwand (10) und den Winkelschenkeln (8, 9), in Profillängsrichtung verlaufend weitere Profilwände angeordnet sind.

6. Geteilt ausgebildeter Dachhaken nach Anspruch 4 oder 5, **dadurch gekennzeichnet, dass**
innerhalb des Raumes, gebildet aus der Profilwand (10) und den Winkelschenkeln (8, 9), beabstandet von der Profilwand (10) eine weitere innere Profilwand (11) angeordnet ist, die vorzugsweise parallel zur äußeren Profilwand (10) verläuft.

7. Geteilt ausgebildeter Dachhaken nach Anspruch 6, **dadurch gekennzeichnet, dass**
zwischen den Profilwänden (10, 11) eine die Profilwände (10, 11) verbindende Verbindungsprofilwand (12) angeordnet ist.

8. Geteilt ausgebildeter Dachhaken nach einem der Ansprüche 1 bis 7, **dadurch gekennzeichnet, dass** die Bohrung (13) im Ende (3) des Hakenteils (2) als Langloch ausgebildet ist.

9. Geteilt ausgebildeter Dachhaken nach einem der Ansprüche 1 bis 8, **dadurch gekennzeichnet, dass**
die Innenfläche des Endes (3) des Hakenteils (2) und die als Auflage dienende Profilwand (10) profiliert ausgebildet sind, vorzugsweise in Form ineinandergreifender Längsverzahnungen (16, 17), um beim Zusammenfügen einen Formschluss zu bilden.

10. Geteilt ausgebildeter Dachhaken nach einem der Ansprüche 1 bis 9, **dadurch gekennzeichnet, dass**
die Profilwand (10) mit der äußeren Kante des Winkelschenkels (9) abschließt oder auf dieser aufliegt.

11. Geteilt ausgebildeter Dachhaken nach einem der Ansprüche 3 bis 10, **dadurch gekennzeichnet, dass**
die Profilwand (10) beidseitig der Längsnut oder des Längsschlitzes (15) Längsverzahnungen (16) aufweist und die Innenfläche des Endes (3) des Hakenteils ebenfalls Längsverzahnungen (17) besitzt, so dass beim Verbinden von Fuß- und Hakenteil (1, 2) der obere Abschnitt des Winkelschenkels (9), der mit der Profilwand (10) bündig abschließt oder auf dem gekröpften Ende aufliegend hergestellt ist, über das Ende (3) des Hakenteils (2) form- und kraftschlüssig mit dem Teil der Profilwand (10) verbunden ist, der mit dem Winkelschenkel (8) verbunden ist.

12. Geteilt ausgebildeter Dachhaken nach einem der Ansprüche 1 bis 11, **dadurch gekennzeichnet, dass**
der Winkelschenkel (8) eine ebene Auflagefläche für die Dachunterkonstruktion aufweist und in der gegenüberliegenden oberen Fläche beabstandet vom Winkelschenkel (9) in der Schenkelhöhe abgesetzt ist.

13. Geteilt ausgebildeter Dachhaken nach einem der Ansprüche 1 bis 12, **dadurch gekennzeichnet, dass**
das Ende (4) des Hakenteils (2), das als Montageanschluss dient, bei hergestellter Verbindung zwischen Fuß- und Hakenteil (1, 2) senkrecht zur Ebene der Anschlüsse (7) angeordnet ist.

## Claims

1. Roof hook having a split design with a base part (1) for establishing a connection to a roof substructure and with a hook part (2) that can be connected to the base part (1) by means of a screwed connection (14) and has at its other end (4) a connecting means (6) for attaching a supporting framework located over the roof waterproofing or for attaching a constructional unit and has a section (5) between the two ends (3, 4), which section (5) can be guided in the roof covering, wherein
the base part (1) is a cut-into-lengths section (X) of an angle profile with angle legs (8, 9) whose one angle leg (8) has connecting means (7) for establishing the connection to the roof substructure, wherein the connecting means (7) are spaced apart from the other angle leg (9), **characterized in that** a profile wall (10) running in the longitudinal direction of the profile is disposed between the two angle legs (8, 9) on the angle inside, which profile wall (10) encloses,
together with the angle leg region of the connecting means (7), an obtuse angle (α) and serves as a supporting surface for the end (3) of the hook part (2) and can be connected to the end (3) of the hook part (2) by means of the screwed connection (14), and that the section (5) of the hook part (2) encloses, together with the end (3) of the hook part, an obtuse angle (β), which section (5) can be guided in the roof covering, wherein α ≤ ß.

2. Roof hook having a split design according to claim 1, **characterized in that** both the profile wall (10) of the base part (1) and the end (3) of the hook part (2) have at least one bore (13) for establishing a connection between the profile wall (10) and the end (3), and a bolt-nut connection serves as a fastener or a screw through the bore (13) of the end (3) engages the bore of the profile wall (10) in a guided manner.

3. Roof hook having a split design according to claim 1, **characterized in that**
the profile wall (10) of the base part (1) has a longitudinal groove with groove edges that are cranked inwards and the end (3) of the hook part (2) has a bore (13) so that a screwed connection (14) between a preform guidedly supported in the longitudinal groove and a further preform inserted through the bore (13) can be established while straining the end (3) and the profile wall (10) that serves as a supporting surface.

4. Roof hook having a split design according to claim 1, **characterized in that**
the profile wall (10) of the base part has a longitudinal slot (15) in the longitudinal direction of the profile and the end (3) of the hook part (2) has a bore (13) so that a screwed connection (14) between a preform movably arranged below the longitudinal slot (15) and a further preform inserted through the bore (13) can be established while straining the end (3) and the profile wall (10) that serves as a supporting surface.

5. Roof hook having a split design according to claim 4, **characterized in that**
within the space formed by the profile wall (10) and the angle legs (8, 9), further profile walls are arranged in the longitudinal direction of the profile.

6. Roof hook having a split design according to claim 4 or 5, **characterized in that**
within the space formed by the profile wall (10) and the angle legs (8, 9), a further inner profile wall (11) is arranged that is spaced apart from the profile wall (10) and preferably runs parallel to the outer profile wall (10).

7. Roof hook having a split design according to claim 6, **characterized in that**
a connecting profile wall (12) is arranged between the profile walls (10, 11), said connecting profile wall (12) connecting the profile walls (10, 11) to each other.

8. Roof hook having a split design according to any one of claims 1 to 7,
**characterized in that**
the bore (13) in the end (3) of the hook part (2) is designed as an elongated hole.

9. Roof hook having a split design according to any one of claims 1 to 8,
**characterized in that**
the inner surface of the end (3) of the hook part (2) and the profile wall (10) that serves as a supporting surface have a profiled design, preferably in the form of engaging longitudinal teeth (16, 17), in order to form a positive-locking connection when being joined.

10. Roof hook having a split design according to any one of claims 1 to 9,
**characterized in that**
the profile wall (10) is flush with or rests on the outer edge of the angle leg (9).

11. Roof hook having a split design according to any one of claims 3 to 10,
**characterized in that**
the profile wall (10) has longitudinal teeth (16) on both sides of the longitudinal groove or of the longitudinal slot (15) and the inner surface of the end (3) of the hook part also has longitudinal teeth (17) so that, when the base part (1) and the hook part (2) are connected to each other, the upper section of the angle leg (9) that is flush with the profile wall (10) or rests on the cranked end is connected, via the end (3) of the hook part (2) and in a positive-locking and non-positive manner, to that part of the profile wall (10) which is connected to the angle leg (8).

12. Roof hook having a split design according to any one of claims 1 to 11,
**characterized in that**
the angle leg (8) has an even supporting surface for the roof substructure and the opposite upper surface of the angle leg (8) is reduced in height where it is spaced apart from the angle leg (9).

13. Roof hook having a split design according to any one of claims 1 to 12,
**characterized in that**
the end (4) of the hook part (2) that serves as a connecting means for mounting is arranged perpendicular to the plane of the connecting means (7) when the connection between the base part (1) and the hook part (2) is established.

## Revendications

1. Crochet de toit constitué de façon divisée, avec une partie de pied (1) pour la réalisation d'un raccordement à une sous-structure de toit et une partie de crochet (2) qui peut être raccordée à la partie de pied (1) par un assemblage vissé (14) et qui dispose à l'autre extrémité (4) d'une connexion (6) pour la fixation d'une ossature porteuse ou d'une unité de construction située sur la couverture du toit et qui présente, entre les deux extrémités (3, 4), un tronçon (5) pouvant être guidé dans la couverture du toit,
la partie de pied (1) étant un tronçon (X) coupé à longueur d'un profilé d'angle avec des branches d'angle (8, 9) dont une branche d'angle (8) dispose de connexions (7) pour la réalisation du raccordement à la sous-structure de toit, les connexions (7) étant disposées à distance de l'autre branche d'angle (9), **caractérisé en ce que**, entre les deux branches d'angle (8, 9), il y a, côté intérieur de l'angle, une paroi profilée (10) dans la direction longitudinale du profilé,
paroi profilée qui enferme, avec la zone de profilé d'angle des connexions (7), un angle obtus (α), paroi profilée qui sert de surface d'appui pour l'extrémité (3) de la partie de crochet (2) et qui peut être raccordée, par l'assemblage vissé (14), à l'extrémité (3) de la partie de crochet (2), et **en ce que** le tronçon (5) de la partie de crochet (2) qui peut être guidé dans la couverture du toit enfermant, avec l'extrémité (3) de la partie de crochet, un angle obtus (β), α ≤ β.

2. Crochet de toit constitué de façon divisée selon la revendication 1, **caractérisé en ce que**
la paroi profilée (10) de la partie de pied (1) et l'extrémité (3) de la partie de crochet (2) présentent, pour la réalisation d'un raccordement entre celles-ci, respectivement au moins un alésage (13), et **en ce qu'**un assemblage boulon-écrou sert d'élément de raccordement, ou **en ce qu'**une vis guidée par l'alésage (13) de l'extrémité (3) s'engage dans l'alésage de la paroi profilée (10).

3. Crochet de toit constitué de façon divisée selon la revendication 1, **caractérisé en ce que**
la paroi profilée (10) de la partie de pied (1) présente une rainure longitudinale avec des arêtes de rainure coudées vers l'intérieur, et **en ce que** l'extrémité (3) de la partie de crochet (2) présente un alésage (13) de sorte qu'un assemblage vissé (14) peut être réalisé entre une pièce de forme supportée de façon guidée dans la rainure longitudinale et une autre pièce de forme guidée par l'alésage (13) avec réalisation d'un haubanage de l'extrémité (3) avec la paroi profilée (10) servant d'appui.

4. Crochet de toit constitué de façon divisée selon la revendication 1, **caractérisé en ce que**
la paroi profilée (10) de la partie de pied présente dans la direction longitudinale de profilé une fente longitudinale (15), et **en ce que** l'extrémité (3) de la partie de crochet (2) présente un alésage (13) de sorte qu'un assemblage vissé (14) peut être réalisé entre une pièce de forme disposée de façon déplaçable au-dessous de la fente longitudinale (15) et une autre pièce de forme guidée par l'alésage (13) avec réalisation d'un haubanage de l'extrémité (3) avec la paroi profilée (10) servant d'appui.

5. Crochet de toit constitué de façon divisée selon la revendication 4, **caractérisé en ce que**,
à l'intérieur de l'espace formé par la paroi profilée (10) et les branches d'angle (8, 9), d'autres parois profilées sont disposées dans la direction longitudinale de profilé.

6. Crochet de toit constitué de façon divisée selon la revendication 4 ou 5, **caractérisé en ce que**,
à l'intérieur de l'espace formé par la paroi profilée (10) et les branches d'angle (8, 9), à distance de la paroi profilée (10), il est disposé une autre paroi profilée (11) intérieure qui est de préférence parallèle à la paroi profilée (10) extérieure.

7. Crochet de toit constitué de façon divisée selon la revendication 6, **caractérisé en ce que**,
entre les parois profilées (10, 11), il est disposé une paroi profilée de raccordement (12) raccordant les parois profilées (10, 11).

8. Crochet de toit constitué de façon divisée selon une des revendications 1 à 7, **caractérisé en ce que**
l'alésage (13) est constitué en tant que trou oblong à l'extrémité (3) de la partie de crochet (2).

9. Crochet de toit constitué de façon divisée selon une des revendications 1 à 8, **caractérisé en ce que**
la surface intérieure de l'extrémité (3) de la partie de crochet (2) et la paroi profilée (10) servant d'appui sont constituées de façon profilée, de préférence en forme de dentures longitudinales (16, 17) engrenant réciproquement afin de former une liaison de forme lors de l'assemblage.

10. Crochet de toit constitué de façon divisée selon une des revendications 1 à 9, **caractérisé en ce que**
la paroi profilée (10) se termine par l'arête extérieure de la branche d'angle (9) ou s'appuie sur celle-ci.

11. Crochet de toit constitué de façon divisée selon une des revendications 3 à 10, **caractérisé en ce que**
la paroi profilée (10) présente, des deux côtés de la rainure longitudinale ou de la fente longitudinale (15), des dentures longitudinales (16), et **en ce que** la surface intérieure de l'extrémité (3) de la partie de crochet possède également des dentures longitudinales (17) de sorte que, lors du raccordement des parties de pied et de crochet (1, 2), le tronçon supérieur de la branche d'angle, (9) qui se termine en affleurement avec la paroi profilée (10) ou qui est réalisé en appui sur l'extrémité coudée, est raccordé, par liaison de forme ou de force, par le biais de l'extrémité (3) de la partie de crochet (2), à la partie de la paroi profilée (10) qui est raccordée à la branche d'angle (8).

12. Crochet de toit constitué de façon divisée selon une des revendications 1 à 11, **caractérisé en ce que**
la branche d'angle (8) présente une face d'appui plane pour la sous-structure de toit et est posée à hauteur de branche dans la surface supérieure opposée, à distance de la branche d'angle (9).

13. Crochet de toit constitué de façon divisée selon une des revendications 1 à 12, **caractérisé en ce que**
l'extrémité (4) de la partie de crochet (2) qui sert de connexion de montage est, lorsque le raccordement est réalisé entre les parties de pied et de crochet (1, 2), disposée perpendiculairement au plan des connexions (7).
